# EUROPEAN PATENT SPECIFICATION

(11) **EP 4 032 412 B1**
(45) Date of publication and mention of the grant of the patent: **25.06.2025**
(21) Application number: 20864400.5
(22) Date of filing: 18.09.2020
(51) Int. Cl.: A23L 27/00, A23L 31/15, A23L 5/00, A23L 13/40, A23L 29/00

(54) **FLAVOUR ENHANCER AND METHOD OF PREPARING SAME**
GESCHMACKSVERSTÄRKER UND VERFAHREN ZU SEINER HERSTELLUNG
EXHAUSTEUR DE GOÛT ET SON PROCÉDÉ DE PRÉPARATION

(30) Priority: 20.09.2019 KR 20190116221
(43) Date of publication of application: 27.07.2022
(73) Proprietor: CJ Cheiljedang Corporation, Seoul 04560 (KR)
(72) Inventor: KIM, Bit Na, Suwon-si, Gyeonggi-do 16495 (KR); KANG, Ji Hyun, Suwon-si, Gyeonggi-do 16495 (KR); JEON, Jin, Suwon-si, Gyeonggi-do 16495 (KR); CHAE, Mi Kyoung, Suwon-si, Gyeonggi-do 16495 (KR)
(74) Representative: Hutter, Anton
(86) International application number: PCT/KR2020/012618
(87) International publication number: WO 2021/054763

(56) References cited:
- CN-A- 102 613 587
- CN-A- 107 822 081
- JP-B1- 5 954 758
- JP-B2- 5 945 318
- KR-A- 20080 009 861
- KR-A- 20120 099 151
- KR-B1- 101 333 092
- KR-B1- 101 333 092
- DERMIKI MARIA ET AL: "Contributions of non-volatile and volatile compounds to the umami taste and overall flavour of shiitake mushroom extracts and their application as flavour enhancers in cooked minced meat", FOOD CHEMISTRY, ELSEVIER LTD, NL, vol. 141, no. 1, 14 March 2013 (2013-03-14), pages 77 - 83, XP028594380, ISSN: 0308-8146, DOI: 10.1016/J.FOODCHEM.2013.03.018

## Description

### TECHNICAL FIELD

The present application relates to a composition for preparing a flavour enhancer for enhancing the flavour of meat, and a method for preparing a flavour enhancer from such composition for preparing a flavour enhancer

### BACKGROUND ART

Recently, according to the diversification of processed foods, research on seasoning materials for implementing various tastes has been actively conducted. Particularly, due to the repulsion against chemically synthesized ingredients, the development of seasonings using natural ingredients is underway, breaking away from the production of Monosodium L-glutamate (MSG), Inosine monophosphate (IMP), and artificial meat flavour, which have been typically widely used. CN107822081 discloses shii-take and beef flavored cream essence. Maria et al. (Food Chemistry 141(1):77-83) describes the contributions of non-volatile and volatile compounds to the umami taste and overall flavour of shiitake mushroom extracts and their application as flavour enhancers in cooked minced meat. CN102613587 describes a method for processing non-toxic meat products. KR101333092 discusses the correlation between the volatile constituents contained in food or the Maillard Reaction Products (MRP) and the sensory properties of the food or MRP.

Meat flavour may be implemented through reactions between precursors such as amino acids, peptides, proteins, nucleic acids, fats, sugars, and thiamine, and as a reaction of such precursors to implement meat flavour, the Maillard reaction is being utilized as an important reaction. The Maillard reaction is a non-enzymatic browning reaction which mainly proceeds with a nitrogen compound containing a reducing sugar and an amino group as a reactant, and is a reaction which produces a characteristic odor as a brown substance is formed through the reaction between precursors. Conditions such as the type of a substrate in the Maillard reaction have a great influence on the flavour of food.

However, when the Maillard reaction proceeds, the characteristic off-taste·off-odor, bitter taste, and the like, which inhibit the taste of a seasoning material, are generated, so that research is underway on a technique for reducing the characteristic inhibitory flavour while implementing meat flavour at a high level.

### DISCLOSURE OF THE INVENTION

### TECHNICAL PROBLEM

The present application is to provide a flavour enhancer with enhanced flavour of meat using natural materials.

In addition, the present application is to provide a material for preparing a flavour enhancer, a composition for preparing a flavour enhancer using the material, and a flavour enhancer prepared therefrom, wherein the material for preparing a flavour enhancer is capable of further enhancing the flavour of meat by being with a hydrolysate of meat while being able to implement the flavour of meat by itself.

In addition, the present application is to provide a method for preparing a flavour enhancer, the method capable of shortening the preparation time of a flavour enhancer which implements meat flavour, and improving the degree of meat flavour and solving the problem of off-state·off-odor.

### TECHNICAL SOLUTION

In order to achieve the above object, one aspect of the present application includes a composition for preparing a flavour enhancer, the composition comprising: a meat hydrolysate comprising an amino acid and sugars; and a mushroom processed product, wherein solids of the mushroom processed product are contained in an amount of 1 parts by weight to 7.5 parts by weight based on 100 parts by weight of solids of the meat hydrolysate, wherein solids of the meat hydrolysate are included in an amount of 20 to 80 parts by weight based on 100 parts by weight of the solids of the composition for preparing a flavour enhancer, wherein the mushroom processed product comprises pyrazine-based compounds and an acetic acid, wherein the content ratio of the pyrazine-based compounds and the acetic acid is 1:1 to 1:3, wherein the pyrazine-based compounds comprise methylpyrazine, 2,5-dimethylpyrazine, 2,6-dimethylpyrazine, 2-ethyl-6-methylpyrazine, and 2,3,5-trimethylpyrazine, and the content of the pyrazine-based compounds represents the sum of contents of methylpyrazine, 2,5-dimethylpyrazine, 2,6-dimethylpyrazine, 2-ethyl-6-methylpyrazine, and 2,3,5-trimethylpyrazine, wherein the content ratio of the pyrazine-based compound and the acetic acid is derived by comparing the area ratio of a peak of the retention time of a material analyzed using gas chromatography with respect to the total area.

The present application also provides a method for preparing a flavour enhancer, the method including heating the composition for preparing a flavour enhancer according to the present application.

### ADVANTAGEOUS EFFECTS

When the composition for preparing a flavour enhancer of the present application is used, it is possible to provide a flavour enhancer having excellent consumer preference by improving off-state·off-odor, bitter taste, and the like while having excellent degree of implementing meat flavour and preference for meat flavour.

Particularly, it is possible to provide a flavour enhancer having increased contents a flavour component capable of enhancing the flavour of beef and a component implementing a umami taste.

In addition, by shortening a production process of a seasoning made of natural ingredients for implementing meat flavour, there is an effect of reducing a characteristic unpleasant odor, which is generated as a production process becomes longer.

### BRIEF DESCRIPTION OF THE DRAWINGS

FIG. 1 is a graph showing the results of measuring the content of an amino acid in a mushroom processed product prepared in Preparation Example 1-2.
FIG. 2 is a graph showing the results of measuring the content of a pyrazine-based compound when analyzing volatile components for flavour enhancers of Comparative Examples 1 and 2, and Example 1 prepared in Preparation Example 1.
FIG. 3 is a graph showing the results of measuring the content of an aromatic component other than the pyrazine-based compound when analyzing volatile components for the flavour enhancers of Comparative Examples 1 and 2, and Example 1 prepared in Preparation Example 1.
FIG. 4 is a graph showing the results of measuring the content of a pyrazine-based compound when analyzing volatile components for flavour enhancers of Comparative Examples 3 and 4 prepared in Preparation Example 1.
FIG. 5 is a graph showing the results of measuring the content of an acetic acid when analyzing volatile components for flavour enhancers of Comparative Example 1 and Example 1 prepared in Preparation Example 1.
FIG. 6 is a graph showing the results of measuring the contents of an aspartic acid and a glutamic acid, which are umami taste components in the flavour enhancers of Comparative Examples 1 and 2, and Example 1 prepared in Preparation Example 1.
FIG. 7 is a graph showing the results of measuring the content of an amino acid other than the aspartic acid and the glutamic acid in the flavour enhancers of Comparative Examples 1 and 2, and Example 1 prepared in Preparation Example 1.
FIG. 8 is a graph showing the results of measuring the content of a pyrazine-based compound when analyzing volatile components for a flavour enhancer prepared in Preparation Example 2.
FIG. 9 is a graph showing the results of measuring the content of an aromatic component other than the pyrazine-based compound when analyzing volatile components for the flavour enhancer prepared in Preparation Example 2.
FIG. 10 is a graph showing the results of measuring the content of an acetic acid when analyzing volatile components of the flavour enhancer prepared in Preparation Example 2.
FIG. 11 is a graph showing the results of measuring the content of an aspartic acid and a glutamic acid, which are umami taste components in the flavour enhancer prepared in Preparation Example 2.
FIG. 12 is a graph showing the results of measuring the content of an amino acid other than the aspartic acid and the glutamic acid in the flavour enhancer prepared in Preparation Example 2.

### BEST MODE FOR CARRYING OUT THE INVENTION

Hereinafter, a composition for preparing a flavour enhancer of the present application will be described in detail.

The composition for preparing a flavour enhancer of the present application includes a meat hydrolysate and a mushroom processed product.

A flavour enhancer of the present application is a material which enhances aroma and savor, and may be used in combination with flavouring agents, sauces, and seasonings.

In the meat hydrolysate of the present application, the "hydrolysate" is prepared by hydrolyzing meat, and includes an amino acid and sugars.

The meat may be at least one selected from the group consisting of beef, pork, lamb, chevon, venison, chicken, duck, and turkey, and as long as it contains protein derived from the meat, a portion of the meat is not particularly limited.

In one aspect, the meat may include beef, and may include at least one portion selected from the group consisting of neck, sirloin, striploin, topside, tenderloin, blade, rib, brisket and flank, plate, and shin and shank, and for example, may include shin and shank.

As the method for hydrolyzing meat, any method known in the art as a protein hydrolysis method, such as an enzyme, acid, or alkali hydrolysis method, may be used without limitation, and specifically, the method may be a hydrolysis method using an enzyme.

At this time, the enzyme is not particularly limited as long as it is an enzyme capable of hydrolyzing animal protein, for example, at least one selected from the group consisting of pancreatin, pineapple extract proteases, papaya extract proteases, kiwi extract proteases, *Bacillus licheniformis-derived* proteases (e.g. Alcalase^{®}), *Aspergillus* oryzae-derived proteases (e.g. Flavourzyme^{®}), α-chymotrypsin, papain, trypsin acetylated, ficin, thermolysin, pepsin, trypsin, serine proteases, threonine proteases, cysteine proteases, aspartate proteases, glutamic proteases, and metalloproteases may be included and used as the enzyme.

In one aspect, the enzyme may be at least one of pancreatin and an *Aspergillus oryzae*-derived protease.

The temperature of the hydrolysis is not particularly limited as long as it is a temperature at which a hydrolase using the enzyme exhibits hydrolysis activity, but may be, specifically, 30°C to 60°C or 40°C to 55°C.

The hydrolysis may be performed until a desired reaction is terminated, and although not particularly limited, may be performed, for example, 30 minutes to 20 hours, 1 hour to 10 hours, 1 hour to 5 hours, 1 hour to 4 hours, or 2 hours to 3 hours.

In addition, the enzyme may be used in an amount typically used for protein hydrolysis of meat, and although the amount is not particularly limited, the enzyme may be used in an amount, for example, 0.01 to 5 parts by weight, specifically 0.1 to 5 parts by weight, 1 to 5 parts by weight, or 2 to 3 parts by weight based on 100 parts by weight of meat.

To raw materials for preparing the meat hydrolysate, other additives may be further added in addition to the meat, water, and the enzyme within a range that does not impair the purpose of the present application.

Although not limited thereto, the meat hydrolysate prepared as described above may have a solid content of 5 to 40 Brix%, for example, 5 to 35 Brix%, 5 to 30 Brix%, 5 to 25 Brix%, 5 To 20 Brix%, or 10 to 15 Brix%. When the solid content is in the above range, it is preferable in terms of the degree of implementing the meat flavour by a flavour enhancer prepared using the meat hydrolysate, and reducing manufacturing cost.

The brix in the present application is an amount of solids contained in 100 g of a solution represented as the number of grams based on sugars, and may be used interchangeably with Brix%, bx, and the like. The brix may be measured by a known method, and may be measured, for example, at room temperature of such as 15°C to 35°C.

In one aspect, the brix may be an amount of solids contained in 100 g of water represented as the number of grams based on sugar.

The solids may contain an amino acid and sugars, and the amino acid may include at least one selected from the group consisting of arginine, leucine, phenylalanine, glutamic acid, aspartic acid, and a salt thereof. The meat hydrolysate may include at least one among glutamic acid, aspartic acid, and a salt thereof as the amino acid in order to enhance the flavour of meat.

The salt of the amino acid is a salt form of the amino acid, but not limited to, for example, sodium salt, magnesium salt, potassium salt, calcium salt, hydrochloride, ammonium salt, and the like of the amino acid, which is a form to be used in food.

Specifically, the arginine may be included in an amount of 10 to 20 parts by weight, specifically in an amount of 12 to 18 parts by weight, or 14 to 16 parts by weight based on 100 parts by weight of the solids of the meat hydrolysate. The leucine may be included in an amount of 10 to 20 parts by weight, specifically in an amount of 11 to 18 parts by weight, or 12 to 15 parts by weight based on 100 parts by weight of the solids of the meat hydrolysate. The phenylalanine may be included in an amount of 5 to 15 parts by weight, specifically in an amount of 8 to 13 parts by weight, or 10 to 12 parts by weight based on 100 parts by weight of the solids of the meat hydrolysate. The glutamic acid may be included in an amount of 0.1 to 5 parts by weight, specifically in an amount of 1 to 3 parts by weight based on 100 parts by weight of the solids of the meat hydrolysate. The aspartic acid may be included in an amount of 0.01 to 1 part by weight, specifically in an amount of 0.01 to 0.05 parts by weight based on 100 parts by weight of the solids of the meat hydrolysate.

The sugars may include at least one among glucose, maltose, sucrose, and fructose, and the composition for preparing a flavour enhancer may include the sugars in an amount of 100 to 600 parts by weight, for example, 150 to 500 parts by weight, 200 to 460 parts by weight, 200 to 400 parts by weight, or 230 to 300 parts by weight based on 100 parts by weight of the amino acid. When the content ratio of the amino acid and the sugars is in the above range, it may be preferable in terms of the degree of improving the meat flavour of a flavour enhancer to be prepared using the amino acid and the sugars, and enhancing nutrition by the flavour enhancer.

In addition, specifically, the glucose may be included in an amount of 10 to 20 parts by weight, specifically, in an amount of 11 to 18 parts by weight, or 12 to 15 parts by weight based on 100 parts by weight of the solids of the meat hydrolysate. The maltose may be included in an amount of 5 to 15 parts by weight, specifically in an amount of 8 to 14 parts by weight, or 10 to 13 parts by weight based on 100 parts by weight of the solids of the meat hydrolysate. The sucrose may be included in an amount of 0.1 to 5 parts by weight, specifically in an amount of 1 to 4 parts by weight, or 2 to 3.5 parts weight based on 100 parts by weight of the solids of the meat hydrolysate. The fructose may be included in an amount of 0.1 to 5 parts by weight, specifically in an amount of 1 to 4 parts by weight, or 2 to 3.5 parts weight based on 100 parts by weight of the solids of the meat hydrolysate.

The meat hydrolysate as described above is included such that solids of the meat hydrolysate are included in an amount of 20 to 80 parts by weight, for example, 20 to 60 parts by weight, 22 to 50 parts by weight, 23 to 40 parts by weight, or 25 to 30 parts by weight based on 100 parts by weight of the solids of the composition for preparing a flavour enhancer.

The mushroom processed product may be included without particular limitation to its obtaining method, component, form, and the like as long as it is a material containing a mushroom component.

A method for obtaining the mushroom processed product may be processed according to a known food processing method such as pulverization, juice extraction, fermentation, extraction, concentration, and the like, and although not particularly limited, the mushroom processed product may be specifically prepared by heating a mushroom extract. For example, the mushroom processed product may be prepared by mixing a refined salt, a fish fermented liquid, and the like with a reaction raw material containing at least one among a mushroom raw material, a mushroom extract, and a concentrate of a mushroom extract, and then reacting the mixed raw materials at a temperature of 110°C to 130°C. The mushroom processed product may serve to further improve meat flavour through a chemical reaction with components of the meat hydrolysate.

The mushroom may be obtained from, for example, at least one selected from the group consisting of pine mushroom, king oyster mushroom, button mushroom, shiitake mushroom, oyster mushroom, and tree ear mushroom.

Although not limited thereto, the mushroom processed product prepared as described above may have, for example, a solid content of 20 to 70 Brix%, for example, 25 to 65 Brix%, 30 to 60 Brix%, 35 to 55 Brix%, 40 to 50 Brix%, or 35 to 45 Brix%. When the solid content is in the above range, it is preferable in terms of the degree of improving the meat flavour of a flavour enhancer prepared using the mushroom processed product, and further improving a flavour such as a umami taste.

The solids of the mushroom processed product may contain an amino acid, and the amino acid may include at least one selected from the group consisting of aspartic acid, glutamic acid, thereonine, serine, tyrosine, lysine, and a salt thereof. The mushroom processed product may include at least one among aspartic acid, glutamic acid, and a salt thereof as the amino acid in order to enhance the flavour of meat of the flavour enhancer of the present application.

The salt of an amino acid is a salt form of the amino acid, and represents, but not limited to, a form to be used in food, for example, sodium salt, magnesium salt, potassium salt, calcium salt, hydrochloride, ammonium salt, and the like of the amino acid.

Specifically, the aspartic acid and its salt may be included in an amount of 1 to 10 parts by weight, 1.5 to 8 parts by weight, 2 to 6 parts by weight, 2 to 4 parts by weight, or 2.5 to 3.8 parts by weight based on 100 parts by weight of the solids of the mushroom processed product. The glutamic acid and its salt may be included in an amount of 1 to 10 parts by weight, 3 to 9 parts by weight, 5 to 8 parts by weight, 6 to 8 parts by weight, or 6.25 to 7.5 parts by weight based on 100 parts by weight of the solids of the mushroom processed product. The thereonine and its salt may be included in an amount of 0.1 to 10 parts by weight, 0.5 to 5 parts by weight, 0.8 to 1.5 parts by weight, or 1 to 1.1 parts by weight based on 100 parts by weight of the solids of the mushroom processed product. The serine and its salt may be included in an amount of 0.1 to 10 parts by weight, 0.5 to 5 parts by weight, 1 to 1.5 parts by weight, or 1.1 to 1.3 parts by weight based on 100 parts by weight of the solids of the mushroom processed product. The tyrosine and its salt may be included in an amount of 0.1 to 10 parts by weight, 0.5 to 5 parts by weight, 1 to 1.5 parts by weight, or 1.1 to 1.3 parts by weight based on 100 parts by weight of the solids of the mushroom processed product. The lysine and its salt may be included in an amount of 0.1 to 10 parts by weight, 0.5 to 5 parts by weight, 0.5 to 1 part by weight, or 0.8 to 0.9 parts by weight based on 100 parts by weight of the solids of the mushroom processed product.

The mushroom processed product includes a pyrazine-based compound and an acetic acid.

The content ratio of the pyrazine-based compound and the acetic acid is 1:1 to 1:3, such as 1:1.5 to 1:2.8, or 1:2 to 1:2.5.

The pyrazine-based compounds include methylpyrazine; 2,5-dimethylpyrazine, 2,6-dimethylpyrazine; 2-ethyl-6-methylpyrazine; and 2,3,5-trimethylpyrazine. In representing the content of the acetic acid, 100 parts by weight of the pyrazine-based compound is the total sum of the content of each of methylpyrazine, 2,5-dimethylpyrazine, 2,6-dimethylpyrazine, 2-ethyl-6-methylpyrazine, and 2,3,5-trimethylpyrazine.

Specifically, although not limited thereto, the content ratio of the pyrazine-based compound and the methylpyrazine may be 1:0.2 to 1:0.5. For example, the content ratio of the pyrazine-based compound and the methylpyrazine may be 1:0.25 to 1:0.4, 1:0.25 to 1:0.35, or 1:0.28 to 1:0.33.

The content of volatile components such as the pyrazine-based compound, the acetic acid and the like in the mushroom processed product of the present application is preferably based on a value measured when the content of volatile components of the flavour enhancer is analyzed.

In addition, the mushroom processed product and/or its volatile components may further include at least one among dimethyl disulfide, 2,4,5-trimethyloxazole, 2-pentylfuran, and 2-acetylfuran, and specifically, the mushroom processed product and/or its volatile components may include dimethyl disulfide, 2,4,5-trimethyloxazole, 2-pentylfuran, and 2-acetylfuran.

Based on 100 parts by weight of the solids of the meat hydrolysate, the solids of the mushroom processed product may be included in an amount of 1 part by weight to 7.5 parts by weight. When the meat hydrolysate and the mushroom processed product are included in the above content ratio, the degree of implementing meat flavour by a flavour enhancer prepared using the meat hydrolysate and the mushroom processed product and/or reducing off-state·off-odor may be more excellent, and there may be an effect of further improving the flavour of a umami taste.

The composition for preparing a flavour enhancer may further include a metal salt for saltiness in addition to the meat hydrolysate and mushroom processed product. The metal salt may be used without limitation as long as it is a material that gives a taste such as saltiness, and may be, specifically, at least one of a sodium salt and a potassium salt. More specifically, the metal salt may be at least one among sodium chloride, potassium chloride, and potassium lactate. The amount of the metal salt may be adjusted as needed, and although not limited thereto, solids of the metal salt may be included, for example, in an amount of 5 to 25 wt%, for example, 7 to 20 wt%, 10 to 18 wt%, 15 to 18 wt% based on the total weight of the solids of the composition for preparing a flavour enhancer. When included in the above range, the effect of enhancing flavour may be further improved.

The composition for preparing a flavour enhancer may further include maltodextrin and/or modified starch.

The amount of maltodextrin used may be adjusted as needed, and although not limited thereto, the maltodextrin may be included, for example, in an amount of 0.1 to 20 wt%, for example, 1 to 19 wt%, 3 to 18 wt%, 5 to 17 wt%, 7 to 15 wt%, 9 to 13 wt%, or 10 to 12 wt% based on the total weight of the composition for preparing a flavour enhancer.

The amount of the modified starch used may be adjusted as needed, and although not limited thereto, the modified starch may be included, for example, in an amount of 0.01 to 10 wt%, for example, 0.01 to 5 wt%, 0.05 to 3 wt%, or 0.1 to 2 wt% based on the total weight of the composition for preparing a flavour enhancer.

In addition, the composition for preparing a flavour enhancer may not include other additives other than the above-described components, or may further include other additives. When the other additives are further included, such other additives may include excipients acceptable in food, and the excipients acceptable in food may include, but not limited to, for example, at least one selected from the group consisting of cross-linked sodium carboxymethyl cellulose, gum ghatti, persimmon color, licorice extract, formic acid, geranyl formate, citronellyl formate, isoamyl formate, masticatory substances, geraniol, microcrystalline cellulose, cinnamic acid, methyl cinnamate, ethyl cinnamate, cinnamaldehyde, cinnamyl alcohol, kaoliang color, benzoyl peroxide, hydrogen peroxide, peroxyacetic acid, ammonium persulfate, guar gum, disodium 5'-guanylate, citric acid, manganese citrate, trisodium citrate, sodium ferrous citrate, ferric citrate, ferric ammonium citrate, potassium citrate, calcium citrate, magnesium silicate, calcium silicate, silicone resin, diatomaceous earth, gluconic acid, sodium gluconate, copper gluconate, magnesium gluconate, manganese gluconate, zinc gluconate, ferrous gluconate, potassium gluconate, calcium gluconate, glutaminase, butyric acid, butyl butyrate, ethyl butyrate, isoamyl butyrate, neotame, nisin, nicotinic acid, nickel, nicotinamide, dextranase, dextran, sodium lauryl sulfate, lactase, lactoferrin concentrates, lactitol, lecithin, rosin, locust bean gum, rutin, linalool, D-mannitol, maltol, D-maltitol, sodium metasilicate, sodium metaphosphate, potassium metaphosphate, sodium metabisulfite, potassium metabisulfite, sodium methoxide, sulfur dioxide, myristic acid, microfibrillated cellulose, vanillin, kaolin, betaine, bentonite, powdered cellulose, sodium fluoride, biotin, vitamins, glacial acetic acid, DL-malic acid, sodium saccharin, saffron color, acid clay. sodium bisulfite, acidic sodium aluminum phosphate, disodium dihydrogen pyrophosphate, calcium dihydrogen pyrophosphate, magnesium oxide, zinc oxide, calcium oxide, methyl salicylate, iron sesquioxide, petroleum wax, sodium hydroxide, potassium hydroxide, calcium hydroxide, magnesium hydroxide, sucralose, shellac, steviol glycoside, stearic acid, sodium stearate, food colorings, benzoic acid, sodium benzoate, alginic acid and sodium alginate, inositol, silicon sioxide, chlorine dioxide, carbon dioxide, titanium dioxide, xanthan gum, lactic acid and sodium lactate, gelatin, gellan gum, aspergillus, carnauba wax, carrageenan, karaya gum, carotene, sodium carboxymethyl cellulose, calcium carboxymethyl cellulose, sodium carboxymethyl starch, casein and sodium caseinate, chitosan, chitin, tara gum, tamarind gum, taurine, tannic acid, palmitic acid, ethyl phenylacetate, isobutyl phenylacetate, pectin, pepsin, hydroxypropylmethyl cellulose, hydroxypropyl cellulose, hyaluronic acid, and nzyme extracts.

When the composition for preparing a flavour enhancer according to the present application is used, there is an effect of reducing the loss of meat flavour while enhancing a unique flavour derived from meat, reducing off-state·off-odor, and preparing a flavour enhancer with excellent overall flavour and umami taste properties.

Hereinafter, a method for preparing a flavour enhancer using the composition for preparing a flavour enhancer of the present application will be described.

The present application provides a method for preparing a flavour enhancer using the composition for preparing a flavour enhancer.

The method for preparing a flavour enhancer includes heat-treating the composition for preparing a flavour enhancer. Specifically, the method may include heat-treating the composition for preparing a flavour enhancer under pressurization conditions (hereinafter, also referred to as 'high-temperature·high-pressure treatment'). When the composition for preparing a flavour enhancer is heat-treated or high-temperature ·high-pressure treated, there may be an effect of removing off-state·off-odor in the composition for preparing a flavour enhancer. In addition, when the composition for preparing a flavour enhancer is heat-treated or high-temperature ·high-pressure treated, there may be an effect of enhancing the flavour of meat through a chemical reaction between components in the composition for preparing a flavour enhancer, and reducing off-state·off-odor, but the mechanism of the present application is not limited thereto.

The heat-treatment or high-temperature ·high-pressure treatment may be performed under conditions capable of volatilizing materials causing off-state·off-odor, such as an acetic acid, in the composition for preparing a flavour enhancer, or may be performed under conditions for inducing a chemical reaction between the components, such as the Mailard reaction.

The heat-treatment may be performed at a temperature of 100°C or higher, for example, 100°C to 130°C or 110°C to 125°C.

In addition, as described above, the heat-treatment may be performed under pressurization conditions, and as an example, may be performed under pressurization conditions, for example, at a pressure of 1 kgf/cm² to 1.5 kgf/cm², for example, 1.2 kgf/cm² to 1.4 kgf/cm².

The heat-treatment may be performed for 10 minutes to 60 minutes, for example 20 minutes to 40 minutes, under the above temperature and/or pressure conditions. It may be advantageous in achieving the effect of enhancing the flavour of meat and further reducing off-state·off-odor when high-temperature ·high-pressure treatment is performed under the above conditions.

In one aspect, the method for preparing a flavour enhancer may further include obtaining a concentrate of the composition for preparing a flavour enhancer by concentrating the composition for preparing a flavour enhancer before the heat-treatment or high-temperature·high-pressure treatment. Accordingly, the heat-treatment or high-temperature·high-pressure treatment may be performed on the concentrate of the composition for preparing a flavour enhancer to further increase processing efficiency.

The obtaining of the concentrate of the composition for preparing a flavour enhancer is not particularly limited to a method as long as it is a method commonly used in food processing process, and may be performed by, for example, a method such as evaporation concentration, freeze concentration, distillation, membrane separation concentration, vacuum concentration, and the like, and the concentrating may be performed before or after, or simultaneously with the heat-treatment (or high-temperature·high-pressure treatment).

In one aspect, the composition for preparing a flavour enhancer may be vacuum concentrated by being stirring at 50±5 rpm under the condition of 670 mmHh or greater and a temperature of 55±5°C.

The concentrate of the composition for preparing a flavour enhancer may be one obtained by concentrating the composition for preparing the flavour enhancer at a magnification of 2 to 10 times, for example, a magnification of 3 to 6 times, or a magnification of 4 to 5 times. For example, the concentrate of the composition for preparing a flavour enhancer may have a solid content of 10 to 80 Brix%, for example, 20 to 75 Brix%, 30 to 70 Brix%, 40 to 65 Brix%, 50 to 65 Brix %, or 55 to 60 Brix%.

Hereinafter, the flavour enhancer of the present application will be described in detail.

The flavour enhancer of the present application includes a pyrazine-based compound and an acetic acid.

The flavour enhancer may be prepared from the composition for preparing a flavour enhancer of the present application, may be obtained according to the method for preparing a flavour enhancer, and may be obtained in the form of a composition.

The pyrazine-based compound may be included as one of flavour components which implement the flavour of meat, and the acetic acid may be included as one of components exhibiting unique off-state·off-odor.

In one aspect, the content ratio of the pyrazine-based compound and the acetic acid may be composed of, although not limited thereto, one lower limited selected from the group consisting of 1:1, 1:1.2, 1:1.5, 1:1.55, 1:1.6, 1:1.65, 1:1.7, and 1:1.75 and/or one upper limit selected from the group consisting of 1:3, 1:2.8, 1:2.6, 1:2.4, 1:2.2, 1:2, and 1:1.8. For example, the content ratio of the pyrazine-based compound and the acetic acid may be 1:1 to 1:3, 1:1.2 to 1:3,1:1.2 to 1:2.2, or 1:1.5 to 1:2.1. Specifically, when the acetic acid is included in the above content, the acetic acid may exhibit an excellent effect of reducing off-state·off-odor of the flavour enhancer. For example, when the pyrazine-based compound and acetic acid are included in the above content ratio, an effect of achieving excellent meat flavour and reducing off-state·off-odor may be more excellent.

In the flavour enhancer according to the present application, the content of the pyrazine-based compound in the total content of volatile components may be 2% or greater. For example, the content of the pyrazine-based compound out of the total content of volatile components may be, for example, 2% to 6%, 2.5% to 5.5%, 3% to 5%, or 3% to 4.5%. The % may be represented by a content%.

The pyrazine-based compound comprise methylpyrazine, 2,5-dimethylpyrazine, 2,6-dimethylpyrazine, 2-ethyl-6-methylpyrazine, and 2,3,5-trimethylpyrazine, and the content of the pyrazine-based compound represents the sum of contents of methylpyrazine, 2,5-dimethylpyrazine, 2,6-dimethylpyrazine, 2-ethyl-6-methylpyrazine, and 2,3,5-trimethylpyrazine.

Specifically, although not limited thereto, the content ratio of the pyrazine-based compound and the methylpyrazine may be 1:0.2 to 1:0.5. For example, the content ratio of the pyrazine-based compound and the methylpyrazine may be 1:0.25 to 1:0.4, 1:0.25 to 1:0.35, or 1:0.25 to 1:0.3.

The content of volatile components such as the pyrazine-based compound, the acetic acid, and the like in the flavour enhancer of the present application is based on a value measured when the content of volatile components of the flavour enhancer is analyzed.

Specifically, the method for analyzing the content of the volatile components is gas chromatography.

The content ratio is derived by comparing the area ratio of a peak of the retention time of a material analyzed using gas chromatography with respect to the total area.

In addition, the content of the volatile components may be measured with respect to a diluted product of the flavour enhancer in order to increase the accuracy of quantitative analysis of the volatile components.

Specifically, the content of the volatile components may be measured by placing the flavour enhancer in a container of about 10 times. For example, 1 g of the flavour enhancer may be placed in a 10 mL container, or 2 g of the flavour enhancer may be placed in a 20 mL container to measure the content of the volatile components.

In addition, the flavour enhancer and/or the volatile components thereof may further include at least one among dimethyl disulfide, 2,4,5-trimethyloxazole, 2-pentylfuran, and 2-acetylfuran, and specifically, the flavour enhancer and/or the volatile components thereof may include dimethyl disulfide, 2,4,5-trimethyloxazole, 2-pentylfuran, and 2-acetylfuran.

The content ratio of the pyrazine-based compound and the dimethyl disulfide may be composed of, although not limited thereto, one lower limited selected from the group consisting of 1:0.1, 1:0.15, and 1:0.2 and/or one upper limit selected from the group consisting of 1:0.5, 1:0.45, 1:0.4, 1:0.35, 1:0.3, and 1:0.25. For example, the content ratio of the pyrazine-based compound and the dimethyl disulfide may be 1:0.1 to 1:0.5, 1:0.1 to 1:0.45, 1:0.11:0.4, 1:0.1 to 1:0.35, 1:0.1 to 1:0.3, 1:0.1 to 1:0.25, 1:0.15 to 1:0.25, or 1:0.2 to 1:0.25.

The content ratio of the pyrazine-based compound and the 2,4,5-trimethyloxazole may be composed of, although not limited thereto, one lower limit selected from the group consisting of 1:0.1, 1:0.15, and 1:0.2 and/or one upper limit selected from the group consisting of 1:0.5, 1:0.45, 1:0.4, 1:0.35, 1:0.3, and 1:0.25. For example, the content ratio of the pyrazine-based compound and the 2,4,5-trimethyloxazole may be 1:0.1 to 1:0.5, 1:0.1 to 1:0.45, 1:0.1 to 1:0.4, 1:0.1 to 1:0.35, 1:0.1 to 1:0.3, 1:0.1 to 1:0.25, 1:0.15 to 1:0.25, or 1:0.2 to 1:0.25.

The content ratio of the pyrazine-based compound and the 2-pentylfuran may be composed of, although not limited thereto, one lower limit selected from the group consisting of 1:0.1, 1:0.15, and 1:0.2 and/or one upper limit selected from the group consisting of 1:0.5, 1:0.45, 1:0.4, 1:0.35, 1:0.3, and 1:0.25. For example, the content ratio of the pyrazine-based compound and the 2-pentylfuran may be 1:0.1 to 1:0.5, 1:0.1 to 1:0.45, 1:0.1 to 1:0.4, 1:0.1 to 1:0.35, 1:0.1 to 1:0.3, 1:0.1 to 1:0.25, 1:0.15 to 1:0.25, or 1:0.2 to 1:0.25.

The content ratio of the pyrazine-based compound and the 2-acetylfuran may be composed of, although not limited thereto, one lower limited selected from the group consisting of 1:0.7, 1:0.8, 1:0.9, 1:1, 1:1.1, 1:1.2, and 1:1.3 and/or one upper limit selected from the group consisting of 1:2.2, 1:2, 1:1.8, 1:1.6, 1:1.5, and 1:1.4. For example, the content ratio of the pyrazine-based compound and the 2-acetylfuran may be 1:0.7 to 1:2.2, 1:0.8 to 1:2, 1:0.9 to 1:1.8, 1:1 to 1:1.6, 1:1.1 to 1:1.5, 1:1.2 to 1:1.4, or 1:1.3 to 1:1.4.

The flavour enhancer of the present application may include at least one among glutamic acid, aspartic acid, and a salt thereof. The salt of an amino acid is a salt form of the amino acid, and represents, but not limited to, a form to be used in food, for example, sodium salt, magnesium salt, potassium salt, calcium salt, hydrochloride, ammonium salt, and the like of the amino acid.

The content of the glutamic acid or the salt thereof in the flavour enhancer may be 14 parts by weight or greater based on 100 parts by weight of the amino acid in the flavour enhancer. For example, the content of the glutamic acid or the salt thereof may be composed of one lower limit selected from the group consisting of 14 parts by weight, 14.2 parts by weight, 15 parts by weight, 16 parts by weight, 17 parts by weight, and 17.5 parts by weight based on 100 parts by weight of the amino acid in the flavour enhancer and/or one upper limit, although not particularly limited, selected from the group consisting of 50 parts by weight, 40 parts by weight, 35 parts by weight, 30 parts by weight, 25 parts by weight, and 20 parts by weight based on 100 parts by weight of the amino acid in the flavour enhancer. For example, the glutamic acid or the salt thereof may be included in an amount of 14 to 50 parts by weight, 14.2 to 40 parts by weight, 15 to 35 parts by weight, 16 to 30 parts by weight, 17 to 25 parts by weight, or 17.5 to 20 parts by weight based on 100 parts by weight of the amino acid in the flavour enhancer.

The content of the aspartic acid or the salt thereof in the flavour enhancer may be 2.5 parts by weight or greater based on 100 parts by weight of the amino acid in the flavour enhancer. For example, the content of the aspartic acid or the salt thereof may be composed of one lower limit selected from the group consisting of 2.5 parts by weight, 2.7 parts by weight, 2.9 parts by weight, 3.0 parts by weight, 3.1 parts by weight, and 3.2 parts by weight and/or one upper limit, although not particularly limited, selected from the group consisting of 20 parts by weight, 15 parts by weight, 10 parts by weight, and 5 parts by weight. For example, the aspartic acid or the salt thereof may be included in an amount of 2.5 to 20 parts by weight, 2.5 to 15 parts by weight, 2.7 to 15 parts by weight, 2.9 to 15 parts by weight 3.1 to 15 parts by weight, 3.1 to 10 parts by weight, or 3.2 to 5 parts by weight based on 100 parts by weight of the amino acid in the flavour enhancer.

In addition, the flavour enhancer may further include other amino acids or salts thereof in addition to the glutamic acid, the aspartic acid, or the salt thereof, and although not limited thereto, such amino acids may be, for example, at least one among threonine, serine, tyrosine, and lysine, and more specifically, may include threonine, serine, tyrosine, and lysine.

The content of the threonine or a salt thereof in the flavour enhancer may be 3 parts by weight or greater based on 100 parts by weight of the amino acid in the flavour enhancer. For example, the content of the threonine or a salt thereof may be 3 parts by weight to 5 parts by weight, or 3 parts by weight to 3.5 parts by weight.

The content of the serine or a salt thereof in the flavour enhancer may be 3 parts by weight or greater based on 100 parts by weight of the amino acid in the flavour enhancer. For example, the content of the serine or a salt thereof may be 3 parts by weight to 5 parts by weight, or 3 parts by weight to 3.5 parts by weight.

The content of the tyrosine or a salt thereof in the flavour enhancer may be 4.5 parts by weight or greater based on 100 parts by weight of the amino acid in the flavour enhancer. For example, the content of the tyrosine or a salt thereof may be 4.5 to 6 parts by weight, or 5 to 5.5 parts by weight.

The content of the lysine or a salt thereof in the flavour enhancer may be 4.5 parts by weight or greater based on 100 parts by weight of the amino acid in the flavour enhancer. For example, the content of the lysine or a salt thereof may be 4.5 to 6 parts by weight, or 5 to 5.5 parts by weight.

Hereinafter, the present application will be described in detail with reference to preparation examples and experimental examples.

### Preparation Example 1. Preparation of flavour enhancer

### 1-1. Preparation of beef hydrolysate

A beef hydrolysate was prepared by cutting beef and then treating the beef with a hydrolase, and the composition of the prepared beef hydrolysate was shown in Table 1 below.

**[Table 1]**

| Component | Content (g/L) |
|---|---|
| Arginine | 1.97 |
| Glucose | 1.84 |
| Leucine | 1.77 |
| Maltose | 1.69 |
| Phenylalanine | 1.49 |
| Sucrose | 0.37 |
| Fructose | 0.36 |
| Glutamic acid | 0.23 |
| Aspartic acid | 0.02 |
| Others | 3.76 |
| Total sum solids | 13.5±0.5 |

### 1-2. Preparation of mushroom processed product

A mushroom processed product raw material prepared by mixing 30% of mushroom extract concentrate, 15% of refined salt, 12% of fish fermented liquid, and 43% of other additives with purified water was reacted at a temperature of 120°C for 30 minutes to prepare a mushroom processed product.

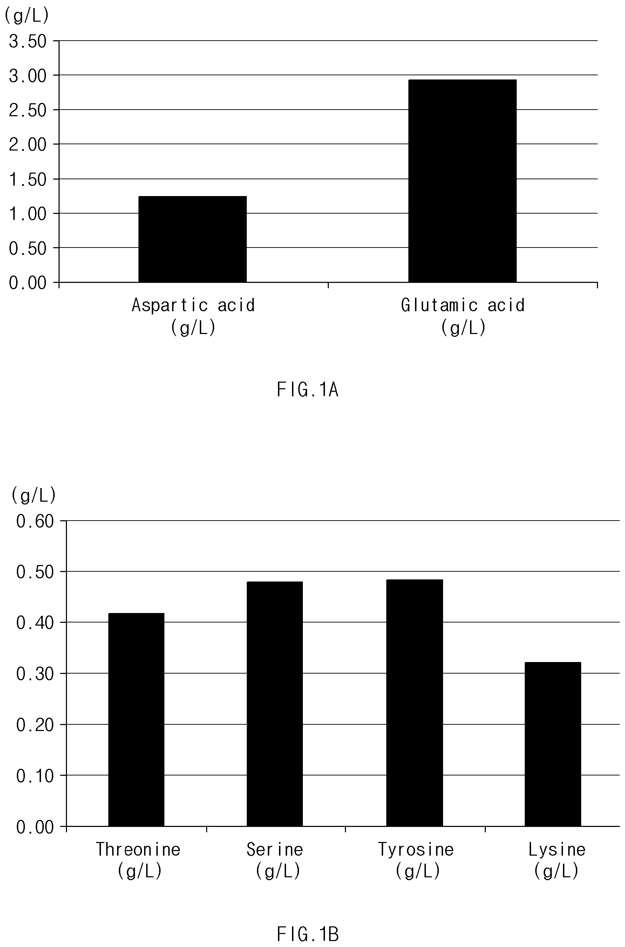

The solid content of the mushroom processed product prepared as described above was 40 bx%, and the composition of volatile components of the prepared mushroom processed product is shown in Table 2 below, and the composition of amino acids is shown in FIG. 1.

The composition of the volatile components of the mushroom product was analyzed using gas chromatography by placing 2 g of the mushroom product prepared above in a 20 mL vial, collecting components volatilized into a gas space (head space of the vial) in the vial. In Table 2 below, the content(%) represents the measurement area of each component in % in the total measurement area of the gas chromatography.

**[Table 2]**

| Component | Content(%) |
|---|---|
| Methylpyrazine | 0.58 |
| 2,5-dimethylpyrazine | 0.27 |
| 2, 6-d | 0.74 |
| 2-ethyl-6-methylpyrazine | 0.09 |
| 2,3,5-trimethylpyrazine | 0.15 |
| 2-acetylfuran | 1.87 |
| Acetic acid | 4.41 |
| Dimethyl disulfide | 0.89 |
| 2,4,5-trimethyloxazole | 0.00 |
| 2-pentylfuran | 0.16 |
| 2-acetylfuran | 1.87 |

### 1-3. Preparation of flavour enhancer

The beef hydrolysate and the mushroom processed product prepared above were uniformly mixed with maltodextrin, salt, and other additives in the composition of Table 3 below to prepare a composition for preparing a flavour enhancer.

In order to compare the beef flavour enhancement effect of the combination of the beef hydrolysate and the mushroom processed product prepared above, Comparative Examples 1 and 2 were prepared so as not to include the mushroom processed product, and in Comparative Example 2, disodium 5'-inosinate (IMP) known as a flavour enhancer was blended instead of the mushroom processed product.

The above-prepared composition for preparing a flavour enhancer of each of Comparative Examples 1 and 2, and Example 1 was concentrated at a magnification of 4.44 by vacuum concentration to obtain a concentrate. The obtained concentrate was high-temperature ·high-pressure treated, and the conditions of the high-temperature·high-pressure treatment are shown in Table 4 below.

In addition, in order to confirm the difference in effect according to the presence or absence and treatment conditions of the high-temperature·high-pressure treatment above, the composition for preparing a flavour enhancer of Example 1 was only concentrated, and then Comparative Example 3 in which high-temperature ·high-pressure treatment was not performed after concentration, and Comparative Example 4 in which only minimal sterilization was performed by heating at 90°C for 10 minutes without performing high-temperature·high-pressure treatment of Table 4 after concentration were prepared together.

**[Table 3]**

| Component (wt%) | Compa rative Example 1 | Compa rative Example 2 | Examp le 1 |
|---|---|---|---|
| Beef hydrolysate (solids 13.5 ± 0.5%) | 75 | 74.5 | 74 |
| Mushroom processed product (solids 40%) | - | - | 1 |
| Disodium 5'-inosinate (IMP) | - | 0.5 | - |
| Metal salt (salt, NaCl) | 6 | 6 | 6 |
| Maltodextrin | 11 | 11 | 11 |
| Additive | 8 | 8 | 8 |
| Total sum | 100 | 100 | 100 |

**[Table 4]**

| Temperature (°C) | 120°C |
|---|---|
| Pressure (kgf/cm²) | 1.3 kgf/cm² |
| Time (minutes) | 35 minutes |

### Experimental Example 1. Analysis of components of flavour enhancer

### Analysis of volatile components - analysis of pyrazine compound and acetic acid

2 g of each of the flavour enhancer of each of Comparative Examples 1, 2, and Example 1 prepared above was placed in a 20 mL viral for GC analysis and equilibrated at 40°C for 10 minutes, and then using SPME Fiber 50/30 µm DVB/CAR/PDMS, Stableflex 23Ga, and Auto Sampler, the flavour enhancer was adsorbed to Fiber at 40°C for 30 minutes by being exposed to 2 cm to the Fiber, and then immediately desorbed at 200°C for 10 minutes to perform the analysis.

The identification of volatile components was performed by comparing the MS values based on the Library shown in Table 5, and by confirming the RI values obtained through experiments and the RI values reported in the literature. (Volatile component concentration) = (area of corresponding volatile component) /(total area of identified volatile component)

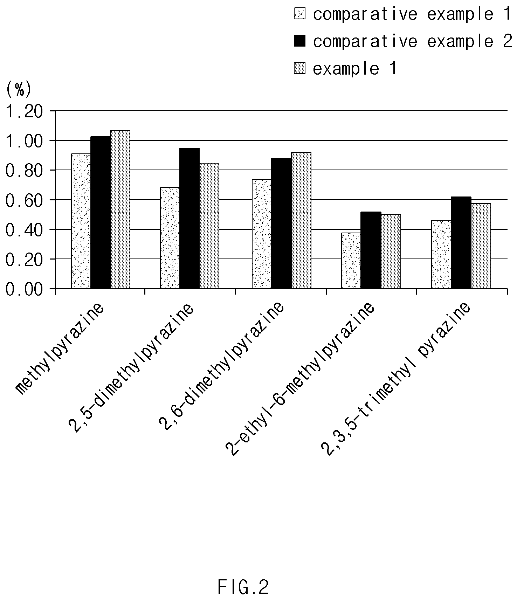

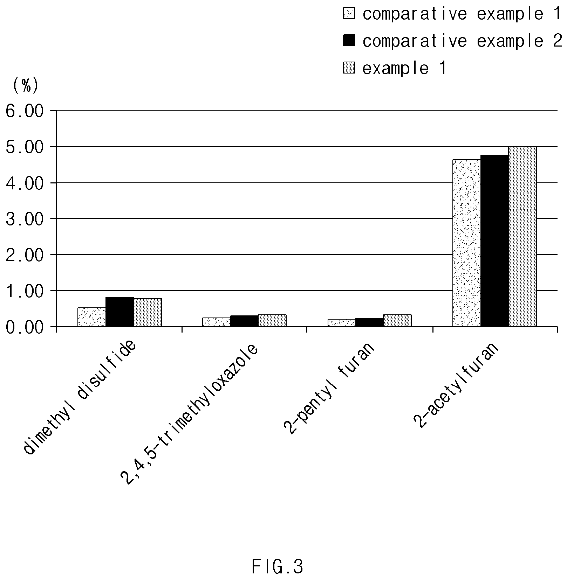

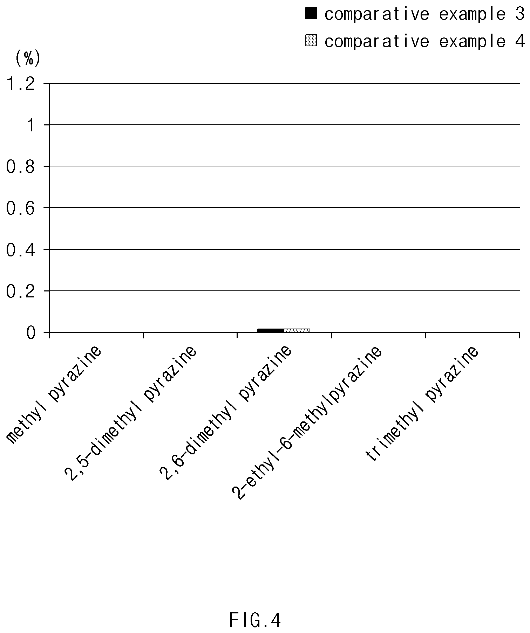

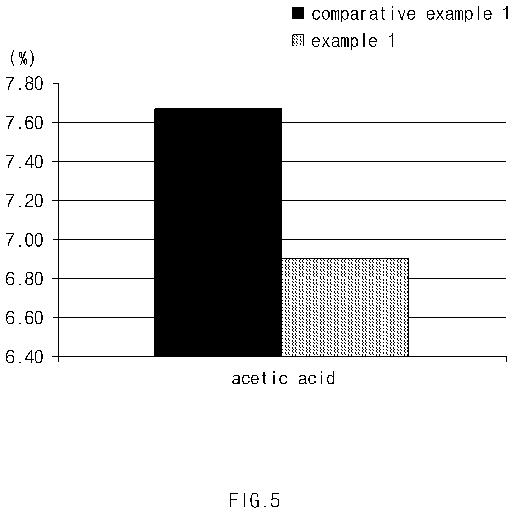

As an example, the content analysis was performed on the pyrazine compound, one of flavour components of meat flavour, and the acetic acid, one of off-state·off-odor components. FIG. 2 shows results of the content analysis of the pyrazine-based compound for Comparative Example 1, Comparative Example 2, and Example 1, and FIG. 3 shows results of the content analysis of aromatic components other than the pyrazine-based compound for Comparative Example 1, Comparative Example 2, and Example 1. In addition, FIG. 4 shows results of the content analysis of the pyrazine-based compound for Comparative Example 3 and Comparative Example 4, and FIG. 5 shows results of the content analysis of the acetic acid for Comparative Example 1 and Example 1.

**[Table 5]**

| GC-MS operating conditions | |
|---|---|
| Analysis instrument | 6890A gas chromatograph connected to a 5973N mass selective detector, Agilent Technologies |
| Auto-sampler | Multi-purpose sampler MPS, Herstel |
| Column | DB-WAX, 60 m, 0.25 d, 0.25 µm film |
| Column filler | SPME fiber (50/30 µm DVB/CAR/PDMS, stableflex 23 Ga, auto sampler, 2 cm) |
| GC-MS oven temperature | 40°C (hold for 2 minutes) -> 3°C/minute -> 130°C (no holding time) -> 3°C/minute -> 200°C (hold for 6 minutes) |
| Identification Library | W9N08, Wiley 9^{th} edition and National Institute of Standards and Technology(NIST) version 08 |
| RI (Retention Index) | Calculate an RT value by analyzing under the same instrument conditions as sample analysis conditions using n-alkane mixture as an external standard material |

As can be seen in FIG. 2, it has been confirmed that Example 1 is excellent in terms of the content of the pyrazine-based compound compared to that of Comparative Example 1 in which the mushroom processed product was not used when preparing a flavour enhancer, and contains the pyrazine-based compound at a level similar to that of Comparative Example 2 using IMP. In addition, as can be seen in FIG. 3, it has been confirmed that Example 1 is also excellent in terms of the content of aromatic components other than the pyrazine-based compounds compared to those of Comparative Examples 1 and 2.

In addition, as can be seen in FIG. 4, when the composition of Example 1 is not subjected to high-temperature ·high-pressure treatment, or a reaction between the components in the composition for preparing a flavour enhancer is not sufficiently performed, the flavour enhancer according to the present application is not prepared, and an effect of enhancing flavour is poor.

In addition, as can be seen in FIG. 5, it has been confirmed the content of the acetic acid exhibiting off-state·off-odor was reduced compared to that of Comparative Example 1.

Through the above, it has been confirmed that an excellent effect of enhancing flavour, and an effect of reducing off-state·off-odor may be exhibited by using a mushroom processed product when preparing a flavour enhancer.

### Analysis of component of amino acid

The composition of the amino acid in the flavour enhancer was analyzed using an amino acid analyzer (L-8900 amino acid analyzer with two single channel colorimeters, column: 2622SC-PH ion exchange column (4.6X60mm, Hitachi, Co., Jap), solution: sodium acetate buffer (MCI buffer PH1, PH4, RG), and a Ninhydrin solution (R1, R2)).

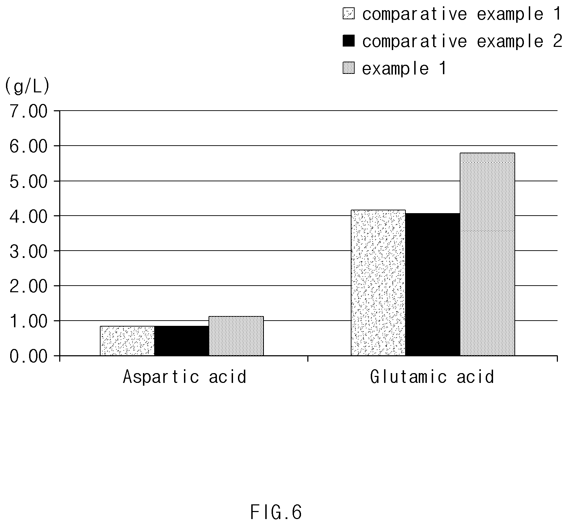

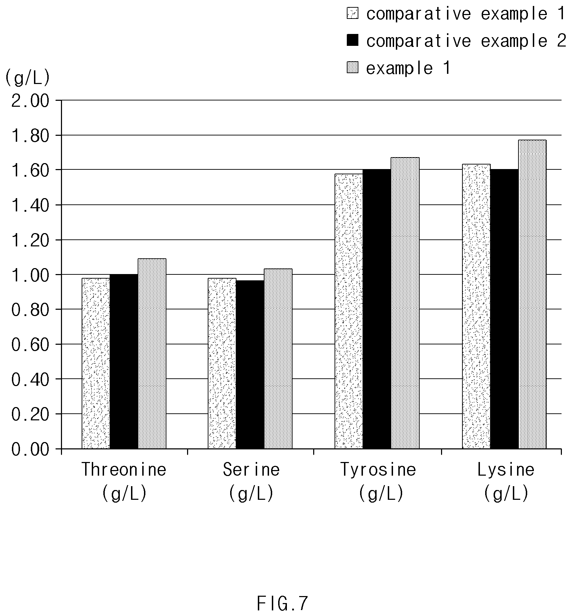

FIG. 6 and FIG. 7 show results of the content analysis of components of the amino acid for Comparative Example 1, Comparative Example 2, and Example 1.

As can be seen in FIG. 6, it has been confirmed that Example 1 is superior to Comparative Example 1 and Comparative Example 2 in terms of the content of the glutamic acid and the aspartic acid, which are umami taste components.

In addition, as can be seen in FIG. 7, it has been confirmed that Example 1 is excellent in terms of the content of amino acids such as threonine, serine, tyrosine, and lysine other than the above two amino acids compared to those of Comparative Example 1 and Comparative Example 2.

### Preparation Example 2. Preparation of flavour enhancer

A flavour enhancer was prepared in the same manner as in Preparation Example 1, except that the composition for preparing a flavour enhancer was blended in the composition shown in Table 6 below. In order to confirm the effect of the flavour enhancer according to the content of the mushroom processed product, the blending was performed by varying the content of the mushroom processed product, and the composition of Example 1 prepared above is also shown in Table 6 below.

**[Table 6]**

| Component (wt%) | Example 1 | Example 2 | Example 3 | Example 4 | Example 5 |
|---|---|---|---|---|---|
| Beef hydrolysate (solids 13.5 ± 0.5%) | 74 | 74.9 | 74.5 | 73.5 | 72 |
| Mushroom processed product (solids 40%) | 1 | 0.1 | 0.5 | 1.5 | 3 |
| Metal salt (salt, NaCl) | 6 | 6 | 6 | 6 | 6 |
| Maltodextrin | 11 | 11 | 11 | 11 | 11 |
| Additive | 8 | 8 | 8 | 8 | 8 |
| Total sum | 100 | 100 | 100 | 100 | 100 |

### Experimental Example 2. Analysis of components of flavour enhancer

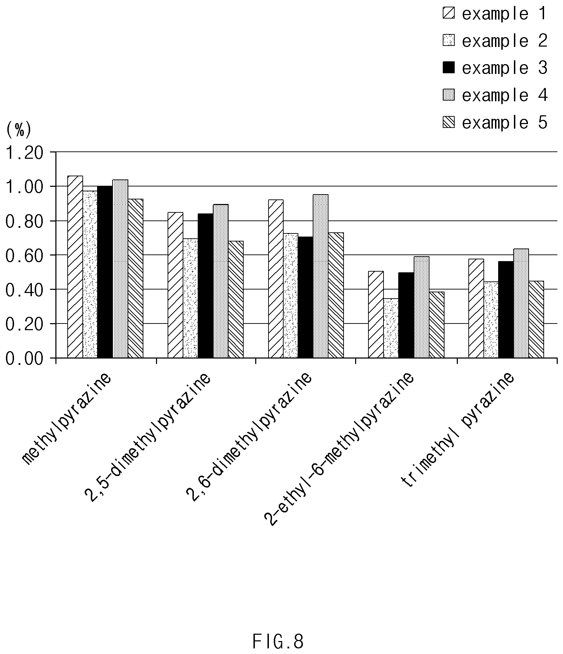

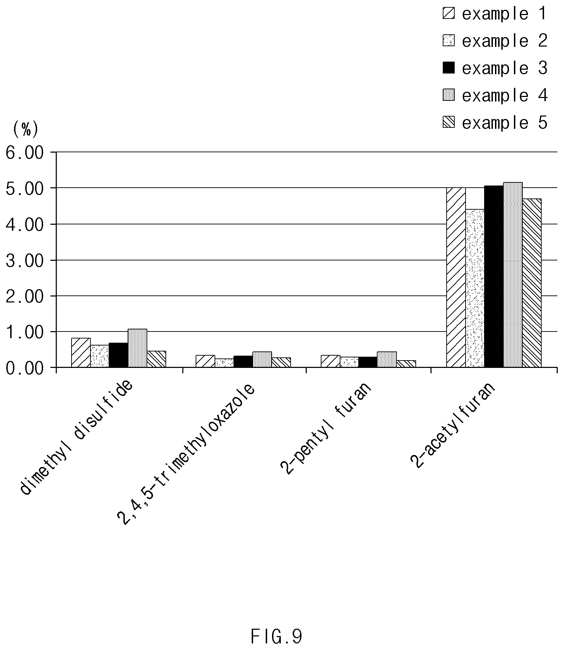

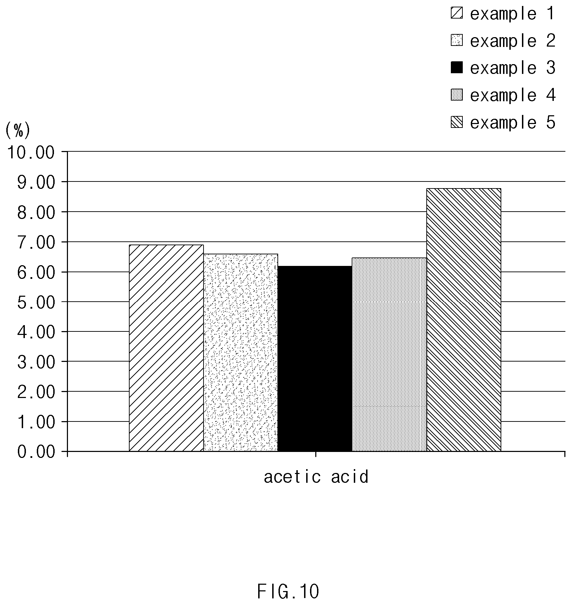

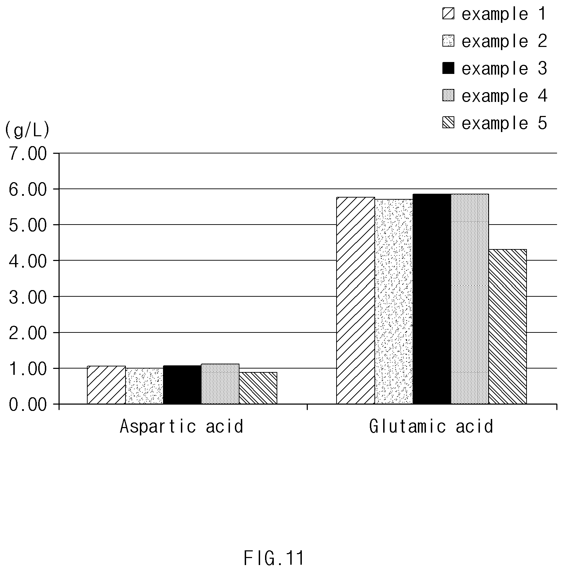

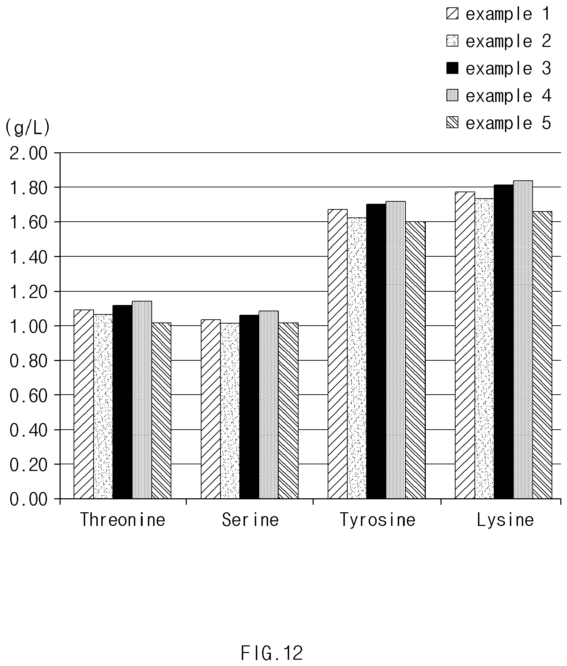

For each of the flavour enhancers prepared in Preparation Example 2, the contents of volatile components and amino acids were measured in the same manner as in Experimental Example 1. FIG. 8 shows results of the component analysis for the pyrazine-based compound, FIG. 9 shows results of the component analysis for aromatic components other than the pyrazine-based compound, and FIG. 10 shows results of the component analysis for the acetic acid. In addition, FIG. 11 shows results of the component analysis for the glutamic acid and the aspartic acid, and FIG. 12 shows results of the component analysis for an amino acid other than the glutamic acid and the aspartic acid.

As can be seen in FIG. 8 to FIG. 12, it has been confirmed that the effect of enhancing flavour has been more excellently improved by the flavour enhancer prepared from each of Example 1, Example 3, and Example 4 in which the mushroom processed product is included in an amount of 0.5 wt% to 1.5 wt% in the composition for preparing a flavour enhancer according to the flavour enhancement of meat flavour and the flavour enhancement in accordance with the reduction in off-state·off-odor.

### Experimental Example 3. Sensory evaluation

Among the flavour enhancers prepared above, Example 1, Example 4, and Example 5, which exhibited a large difference in the content of pyrazine-based compounds, were selected to perform evaluation on the intensity of meat flavour, sensory for the preference thereof, sensory for the intensity of umami taste due to the difference in the content of acidic amino acids exhibiting the umami taste.

The sensory evaluation was performed for 33 males and 33 females each aged 25 to 45, and the intensity and preference were evaluated using a 5-point scale, and the results are shown in Table 7 below.

**[Table 7]**

| | Meat flavour intensity | Meat flavour preference | Umami taste intensity |
|---|---|---|---|
| Example 1 | 3.61^{ab} | 3.39^{ab} | 3.52^{a} |
| Example 4 | 3.85^{a} | 3.73^{a} | 3.85^{a} |
| Example 5 | 3.27^{b} | 3.24^{b} | 3.06^{b} |

As can be seen in Table 7 above, it has been confirmed that the flavour enhancer according to Example 4 exhibited the best results in sensory evaluation for taste.

## Claims

1. A composition for preparing a flavour enhancer, the composition comprising:
a meat hydrolysate comprising an amino acid and sugars; and
a mushroom processed product,
wherein solids of the mushroom processed product are contained in an amount of 1 parts by weight to 7.5 parts by weight based on 100 parts by weight of solids of the meat hydrolysate,
wherein solids of the meat hydrolysate are included in an amount of 20 to 80 parts by weight based on 100 parts by weight of the solids of the composition for preparing a flavour enhancer,
wherein the mushroom processed product comprises pyrazine-based compounds and an acetic acid, wherein the content ratio of the pyrazine-based compounds and the acetic acid is 1:1 to 1:3,
wherein the pyrazine-based compounds comprise methylpyrazine, 2,5-dimethylpyrazine, 2,6-dimethylpyrazine, 2-ethyl-6-methylpyrazine, and 2,3,5-trimethylpyrazine, and the content of the pyrazine-based compounds represents the sum of contents of methylpyrazine, 2,5-dimethylpyrazine, 2,6-dimethylpyrazine, 2-ethyl-6-methylpyrazine, and 2,3,5-trimethylpyrazine,
wherein the content ratio of the pyrazine-based compound and the acetic acid is derived by comparing the area ratio of a peak of the retention time of a material analyzed using gas chromatography with respect to the total area.

2. The composition for preparing a flavour enhancer of claim 1, further comprising a metal salt.

3. The composition for preparing a flavour enhancer of claim 1, wherein the amino acid comprises at least one selected from the group consisting of arginine, leucine, phenylalanine, glutamic acid, aspartic acid, and a salt thereof.

4. A method for preparing a flavour enhancer comprising heating the composition for preparing a flavour enhancer according to any one of claims 1 to 3.

5. The method of claim 4, further comprising concentrating the composition for preparing a flavour enhancer before, after, or at the same time of the heating.

6. The method of claim 4, wherein the heating is performed at 100°C or higher.

## Patentansprüche

1. Zusammensetzung zur Herstellung eines Geschmacksverstärkers, wobei die Zusammensetzung Folgendes umfasst:
ein Fleischhydrolysat, das eine Aminosäure und Zucker umfasst; und
ein pilzverarbeitetes Produkt,
wobei Feststoffe des pilzverarbeiteten Produkts in einer Menge von 1 Gewichtsteilen bis 7,5 Gewichtsteilen basierend auf 100 Gewichtsteilen Feststoffen des Fleischhydrolysats enthalten sind,
wobei Feststoffe des Fleischhydrolysats in einer Menge von 20 bis 80 Gewichtsteilen basierend auf 100 Gewichtsteilen der Feststoffe der Zusammensetzung zur Herstellung eines Geschmacksverstärkers enthalten sind,
wobei das pilzverarbeitete Produkt Verbindungen auf Pyrazinbasis und eine Essigsäure umfasst, wobei das Gehaltsverhältnis der Verbindungen auf Pyrazinbasis und der Essigsäure 1:1 bis 1:3 ist,
wobei die Verbindungen auf Pyrazinbasis Methylpyrazin, 2,5-Dimethylpyrazin, 2,6-Dimethylpyrazin, 2-Ethyl-6-methylpyrazin und 2,3,5-Trimethylpyrazin umfassen und der Gehalt der Verbindungen auf Pyrazinbasis die Summe der Gehalte an Methylpyrazin, 2,5-Dimethylpyrazin, 2,6-Dimethylpyrazin, 2-Ethyl-6-methylpyrazin und 2,3,5-Trimethylpyrazin darstellt,
wobei das Gehaltsverhältnis der Verbindung auf Pyrazinbasis und der Essigsäure durch Vergleichen des Flächenverhältnisses eines Peaks der Retentionszeit eines Materials abgeleitet ist, das unter Verwendung von Gaschromatographie in Bezug auf die Gesamtfläche analysiert wird.

2. Zusammensetzung zur Herstellung eines Geschmacksverstärkers nach Anspruch 1, ferner umfassend ein Metallsalz.

3. Zusammensetzung zur Herstellung eines Geschmacksverstärkers nach Anspruch 1, wobei die Aminosäure zumindest eines ausgewählt aus der Gruppe bestehend aus Arginin, Leucin, Phenylalanin, Glutaminsäure, Asparaginsäure und einem Salz davon umfasst.

4. Verfahren zur Herstellung eines Geschmacksverstärkers, umfassend Erhitzen der Zusammensetzung zur Herstellung eines Geschmacksverstärkers nach einem der Ansprüche 1 bis 3.

5. Verfahren nach Anspruch 4, ferner umfassend Konzentrieren der Zusammensetzung zur Herstellung eines Geschmacksverstärkers vor, nach oder gleichzeitig mit dem Erhitzen.

6. Verfahren nach Anspruch 4, wobei das Erhitzen bei 100 °C oder höher durchgeführt wird.

## Revendications

1. Composition pour la préparation d'un exhausteur de goût, la composition comprenant :
un hydrolysat de viande comprenant un acide aminé et des sucres ; et
un produit transformé à base de champignons,
dans laquelle des matières solides du produit transformé à base de champignons sont contenues en une quantité comprise entre 1 partie en poids et 7,5 parties en poids pour 100 parties en poids de matières solides de l'hydrolysat de viande,
dans laquelle les matières solides de l'hydrolysat de viande sont comprises en une quantité comprise entre 20 et 80 parties en poids pour 100 parties en poids des matières solides de la composition pour la préparation d'un exhausteur de goût,
dans laquelle le produit transformé à base de champignons comprend des composés à base de pyrazine et un acide acétique, dans laquelle le rapport de teneur des composés à base de pyrazine et de l'acide acétique est compris entre 1:1 et 1:3,
dans laquelle les composés à base de pyrazine comprennent la méthylpyrazine, la 2,5-diméthylpyrazine, la 2,6-diméthylpyrazine, la 2-éthyl-6-méthylpyrazine et la 2,3,5-triméthylpyrazine, et la teneur en composés à base de pyrazine représente la somme des teneurs en méthylpyrazine, 2,5-diméthylpyrazine, 2,6-diméthylpyrazine, 2-éthyl-6-méthylpyrazine et 2,3,5-triméthylpyrazine,
dans laquelle le rapport de teneur du composé à base de pyrazine et de l'acide acétique est dérivé en comparant le rapport de surface d'un pic du temps de rétention d'un matériau analysé par chromatographie en phase gazeuse par rapport à la surface totale.

2. Composition pour la préparation d'un exhausteur de goût de la revendication 1, comprenant en outre un sel métallique.

3. Composition pour la préparation d'un exhausteur de goût de la revendication 1, dans laquelle l'acide aminé comprend au moins l'un choisi dans le groupe constitué de l'arginine, de la leucine, de la phénylalanine, de l'acide glutamique, de l'acide aspartique et d'un sel de ceux-ci.

4. Procédé pour la préparation d'un exhausteur de goût comprenant le chauffage de la composition pour la préparation d'un exhausteur de goût selon l'une quelconque des revendications 1 à 3.

5. Procédé de la revendication 4, comprenant en outre la concentration de la composition pour la préparation d'un exhausteur de goût avant, après ou en même temps que le chauffage.

6. Procédé de la revendication 4, dans lequel le chauffage est effectué à 100 °C ou plus.
